# EUROPEAN PATENT APPLICATION

(11) **EP 4 549 063 A1**
(43) Date of publication of application: **07.05.2025**
(21) Application number: 23831203.7
(22) Date of filing: 20.06.2023
(51) Int. Cl.: B23B 31/117

(54) **UNCLAMPING ARM AND MACHINE TOOL**

(30) Priority: 30.06.2022 JP 2022106320
(71) Applicant: BROTHER KOGYO KABUSHIKI KAISHA, Nagoya-shi, Aichi 467-8561 (JP)
(72) Inventor: AMANO, Masahito, Nagoya-shi, Aichi 467-8562 (JP)
(74) Representative: Becker, Eberhard
(86) International application number: PCT/JP2023/022733
(87) International publication number: WO 2024/004757

(57) **Abstract**

Provided are: an unclamping arm capable of avoiding interference with other members; and a machine tool. An unclamping arm 50 comprises a right fulcrum section 63, a left fulcrum section 64, a cam follower 54, and pressing sections 57, 58. The right fulcrum section 63 and the left fulcrum section 64 are rotatably supported within a main shaft head. The cam follower 54, in conjunction with the movement of the main shaft head, comes into contact with a cam surface provided to an upright column, and receives external pressure. As a result of the cam follower 54 receiving external pressure, the pressing sections 57, 58 rotate about the right fulcrum section 63 and the left fulcrum section 64, thereby pressing or not pressing pins of a draw bar provided within a main shaft. The pressing sections 57, 58 are positioned between the cam follower 54 and the right fulcrum section 63 and left fulcrum section 64; the right fulcrum section 63, the left fulcrum section 64, and the pressing sections 57, 58 are positioned on a straight line intersecting the axial direction of the main shaft; and the cam follower 54 is positioned at a location separated to the upright column-side from the right fulcrum section 63 and left fulcrum section 64.

## Description

### BACKGROUND

### Technical Field

The present invention relates to an unclamping arm and a machine tool.

### Related Art

Patent Document 1 discloses an automatic tool replacement device. The automatic tool replacement device replaces tools in a machine tool. The machine tool has an unclamping lever rotatably provided in a spindle head. The unclamping lever is linear and extends in the up-down direction, and has a fulcrum section at its lower part, a cam surface at its upper part, and a pressing section between the fulcrum section and the cam surface. The fulcrum section is rotatably attached to a support shaft provided within the spindle head. The pressing section abuts against a pin of a draw bar provided inside the spindle. The cam surface is located below a cam follower provided inside the upright column. When the spindle head rises, the distance between the spindle and the cam follower decreases, and the cam surface of the unclamping lever abuts against the cam follower. As the cam follower slides along the cam surface, the cam surface moves forward, and the unclamping lever swings about the support shaft. The pressing section of the unclamping lever pushes the pin of the draw bar forward. The draw bar moves forward against the spring force, and the draw bar releases the clamp on the tool holder mounted on the spindle.

### Citation List

### Patent Document

Patent Document 1: Japanese Patent Laid-open No. H6-740

### SUMMARY

### Technical Problem

The unclamping lever described in Patent Document 1 is linear and extends in the up-down direction, such that a fulcrum section, a pressing section, and a cam surface are arranged in the up-down direction. Within the spindle head, the area on the opposite side of the fulcrum section side with respect to the spindle is narrow, and other members such as a ball screw that moves the spindle head are located in front of the cam surface. In a case where the distance between the cam surface and the other member is short, there is a possibility that the cam surface will interfere with the other member when the unclamping lever swings forward about the fulcrum section.

An object of the present invention is to provide an unclamping arm and a machine tool capable of avoiding interference with other members.

### Solution to Problem

An unclamping arm of claim 1 rotatably supported within a spindle head of a machine tool which includes: a spindle on which a tool is mounted; a tool gripping mechanism provided inside the spindle and configured to fix or release the tool to and from the spindle, the spindle head that rotatably holds the spindle, and an upright column that movably supports the spindle head, and configured to operate fixing or releasing of the tool by the tool gripping mechanism, the unclamping arm including: a fulcrum section rotatably supported within the spindle head, a force point section, in conjunction with a movement of the spindle head, configured to come into contact with a contact section provided on the upright column and receive an external pressure, and an action point section configured to, by the force point section rotating about the fulcrum section upon receiving the external pressure, press or not press the tool gripping mechanism to operate fixing or releasing of the tool by the gripping mechanism, in which the action point section is located between the fulcrum section and the force point section, the fulcrum section and the action point section are located on a straight line intersecting with an axial direction of the spindle, and the force point section is located at a position away from the fulcrum section towards a side of the upright column. The force point section of the unclamping arm is located at a position away from the fulcrum section toward the upright column side. Therefore, when the unclamping arm rotates in conjunction with the movement of the spindle head, the force point section may avoid an interference area. The interference area is an area on the opposite side of the spindle with respect to the fulcrum section side, and is an area that may interfere with other members. Since the action point section of the unclamping arm is located between the fulcrum section and the force point section, the arm part connecting the fulcrum section and the force point section and the arm part connecting the fulcrum section and the action point section may be integrated into a single shape. Therefore, compared to a configuration in which the two arm parts have different shapes, the unclamping arm may be designed to be compact. The term "tool" is a concept that includes a tool holder that holds the tool. Moreover, the force point section may be located at a position away from the fulcrum section toward the upright column and away in a direction perpendicular to the axial direction of the spindle.

The axial direction of the spindle of the machine tool to which the unclamping arm of claim 2 is applied may be horizontal. Since the axial direction is horizontal, the machine tool on which the unclamping arm is provided is of a lateral type. In a lateral machine tool, an interference area may be located on the upper side of the spindle. In this case, by arranging the fulcrum section below the spindle, the force point section may be arranged at a position away from the interference area towards the upright column.

The machine tool to which the unclamping arm of claim 3 is applied may be provided with a cam at the contact section, and a roller that slides on the cam may be provided at the force point section. As the spindle head moves, a roller provided at the force point section of the unclamping arm slides on a cam provided on the upright column side, allowing the unclamping arm to rotate smoothly about the fulcrum section.

The fulcrum section of the unclamping arm of claim 4 may be arranged at a position away from a moving surface of the upright column on a side where the spindle head moves toward a side of the spindle side, and the force point section is configured to, in conjunction with the movement of the spindle head, come into contact with a contact section provided on the moving surface of the upright column upon receiving the external pressure. In a configuration in which the contact section is provided on the moving surface of the upright column, the unclamping arm needs to be disposed on the outside of the upright column. By arranging the fulcrum section at a position away from the moving surface of the upright column towards the spindle side, the force point section may be brought into contact with the contact section with the unclamping arm positioned outside the upright column. Therefore, the unclamping arm may swing about the fulcrum section by the force point section coming into contact with the contact section and receiving an external pressure, and the force point section is capable of avoiding the interference area.

The unclamping arm according to claim 5 may be provided, between the action point section and the force point section, with an extension part that extends from a side of the action point section to the side of the upright column in a direction intersecting with the straight line. Therefore, since the unclamping arm is provided with the extension part between the action point section and the force point section, the force point section may be easily disposed at a position away from the fulcrum section towards the upright column.

A machine tool according to claim 6 includes: a spindle on which a tool is mounted, a tool gripping mechanism provided inside the spindle and configured to fix or release the tool to or from the spindle, a spindle head that rotatably holds the spindle, an upright column that movably supports the spindle head, and an unclamping arm rotatably supported within the spindle head and configured to operate fixing or releasing the tool by the tool gripping mechanism, in which the unclamping arm includes: a fulcrum section rotatably supported within the spindle head, a force point section, in conjunction with movement of the spindle head, configured to come into contact with a contact section provided on the upright column upon receiving an external pressure, and an action point section configured to, by the force point section rotating about the fulcrum section upon receiving the external pressure, press or not press the tool gripping mechanism to operate fixing or releasing of the tool by the tool gripping mechanism, the action point section is located between the fulcrum section and the force point section, the fulcrum section and the action point section are located on a straight line intersecting an axial direction of the spindle, and the force point section is located at a position away from the fulcrum section towards the side of the upright column. Therefore, the machine tool is capable of obtaining the same effect as that of claim 1.

### BRIEF DESCRIPTION OF THE DRAWINGS

FIG. 1 is a perspective view of a machine tool 1.
FIG. 2 is a perspective view of the machine tool 1 (shutter 103: closed).
FIG. 3 is a perspective view of the machine tool 1 (shutter: open).
FIG. 4 is a perspective view of the machine tool 1 (magazine cover omitted).
FIG. 5 is a right side view of the machine tool 1 (magazine cover omitted).
FIG. 6 is a right side view of an upright column 5 and its surroundings, showing a part of a spindle head 6 in cross section.
FIG. 7 is a diagram showing a state in which an unclamping arm 50 has swung forward from the state shown in FIG. 6.
FIG. 8 is a perspective view of the unclamping arm 50.
FIG. 9 is a right side view of the unclamping arm 50.
FIG. 10 is a right side view of the machine tool 1 immediately after machining.
FIG. 11 is a diagram showing a state in which a spindle 7 has moved backward from the state shown in FIG. 10.
FIG. 12 is a diagram showing a state in which the spindle 7 has risen to the Y-axis ATC origin.
FIG. 13 is a diagram showing a state in which the spindle 7 has moved backward to the ATC position.

### DESCRIPTION OF THE EMBODIMENTS

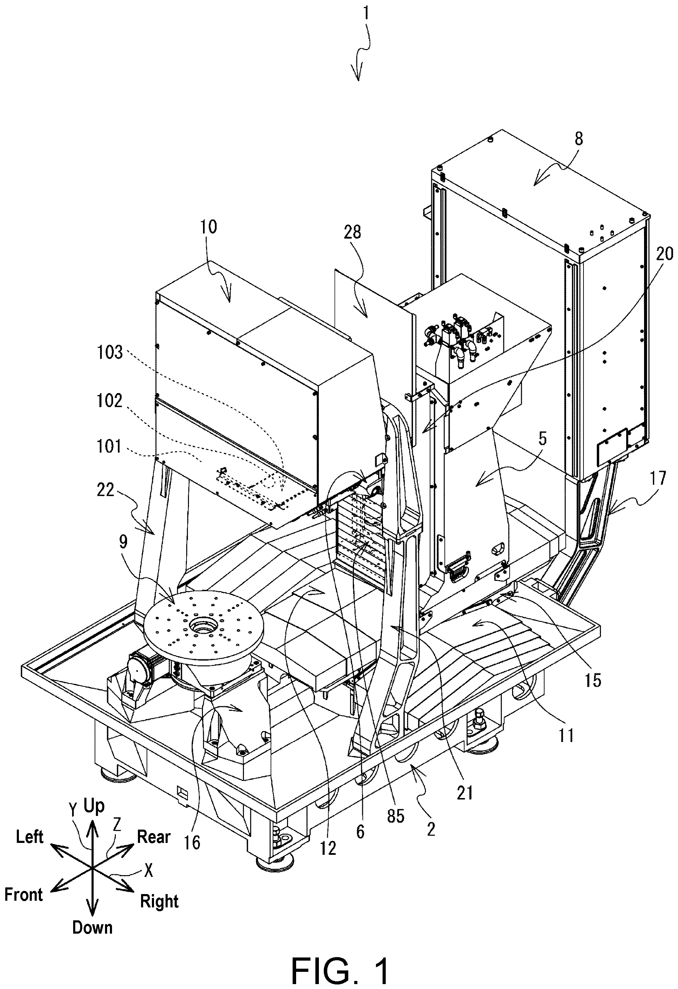

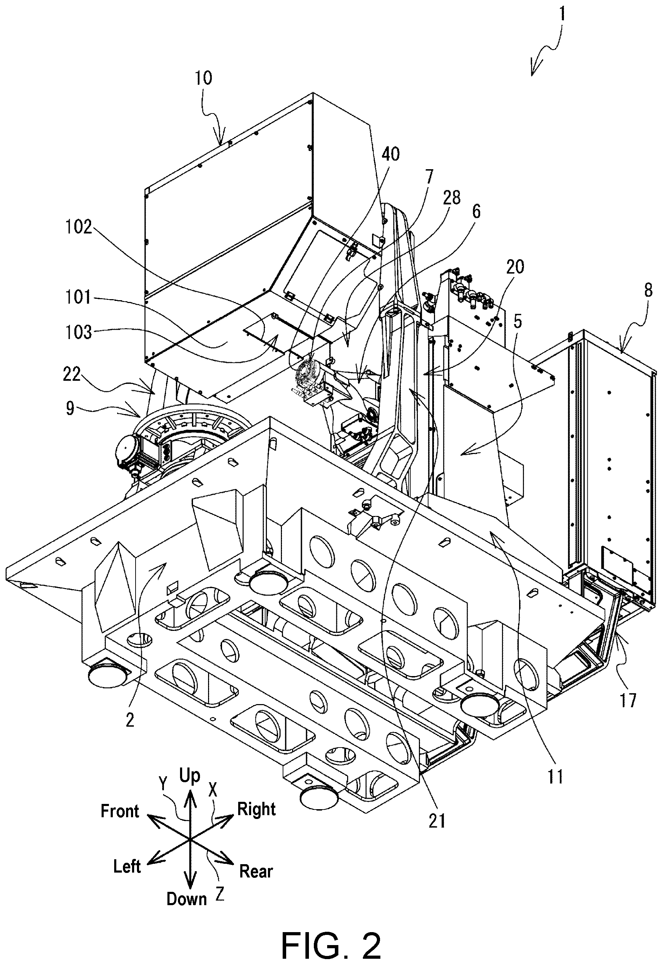

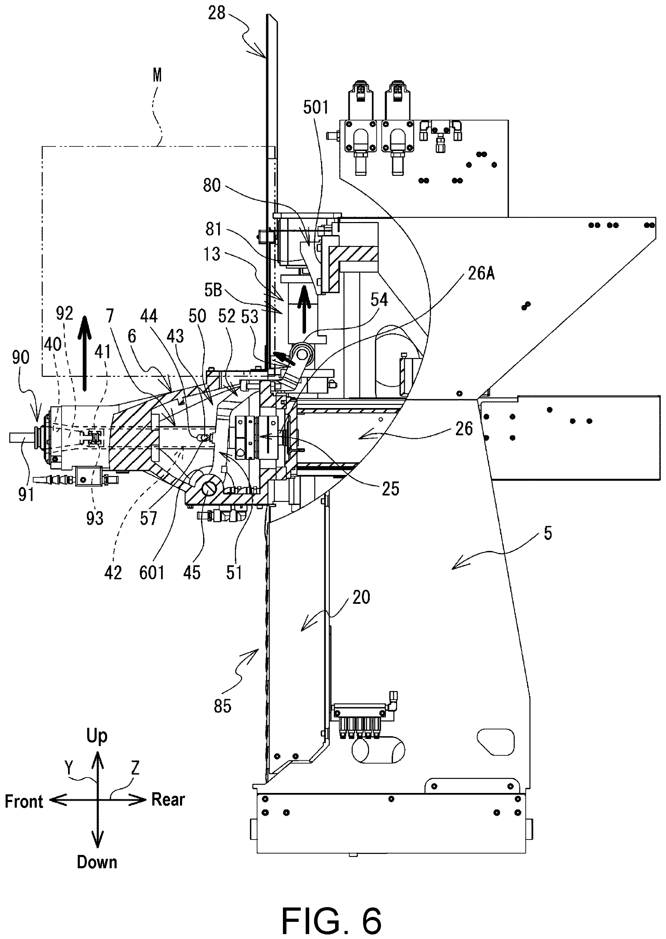

An embodiment of the present invention will now be described. In the following explanation, arrows in the drawings will be used to indicate left and right, up and down, and front and back. The left-right direction, the up-down direction, and the front-rear direction of a machine tool 1 correspond to the X-axis direction, the Y-axis direction, and the Z-axis direction of the machine tool 1, respectively. The machine tool 1 shown in FIG. 1 is of a lateral type in which a spindle 7 (see FIGS. 2 and 6) to be described below extends in the front-rear direction (Z-axis direction), and an upright column 5 to be described below moves in the X-axis direction and the Z-axis direction.

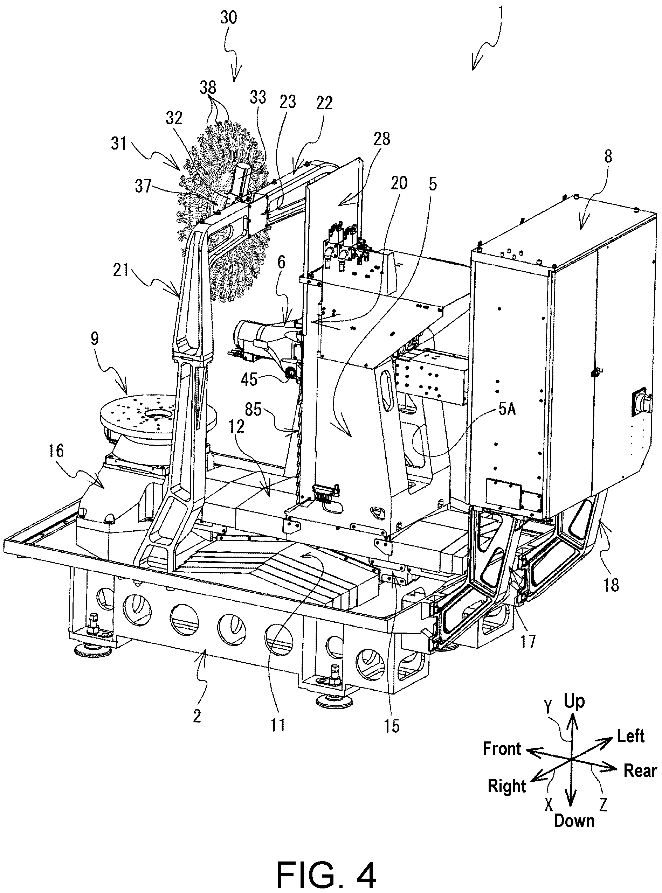

The structure of the machine tool 1 will be described with reference to FIG. 1 to FIG. 7. As shown in FIG. 1 and FIG. 2, the machine tool 1 includes a base 2, an upright column 5, a spindle head 6, a spindle 7 (see FIGS. 2 and 6), a control box 8, a rotary table 9, an X-axis moving mechanism 11, a Z-axis moving mechanism 12, a Y-axis moving mechanism 13 (see FIG. 6), an ATC device 30 (see FIG. 4), a magazine cover 10, etc. The base 2 is an iron foundation having a substantially rectangular shape in plan view and is long in the Z-axis direction. The X-axis moving mechanism 11 is provided at the rear part of the upper surface of the base 2 and movably supports a carriage 15 in the X-axis direction. The Z-axis moving mechanism 12 is provided on the upper surface of the carriage 15 and movably supports the upright column 5 in the Z-axis direction.

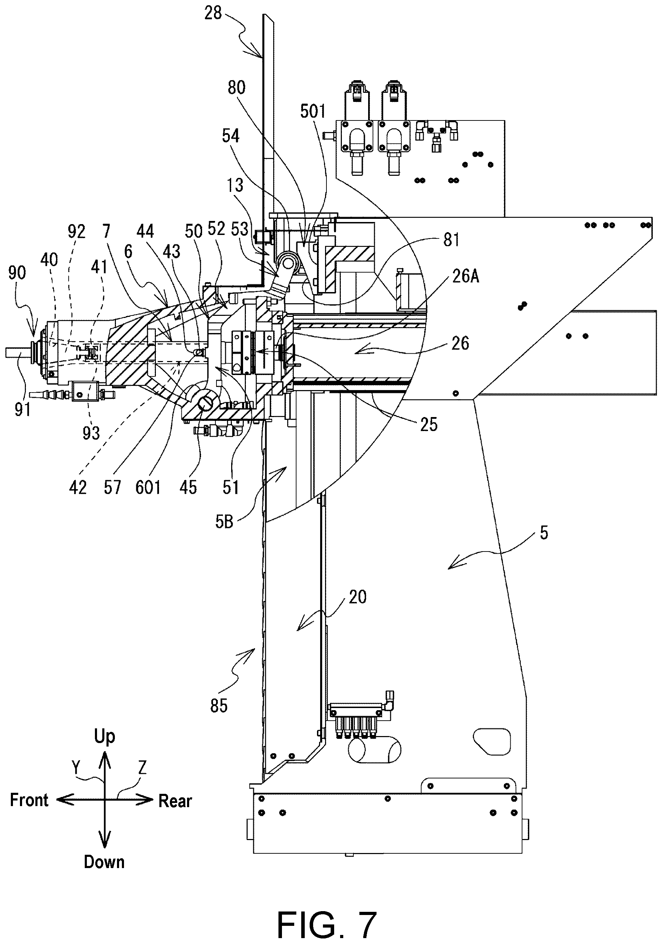

The upright column 5 is an upright column extending in the up-down direction. The upright column 5 has a through hole 5A (see FIG. 4). The through hole 5A has a vertically long rectangular shape when viewed from the front, and penetrates the front surface and the rear surface of the upright column 5 in the front-rear direction. A frame cover 20 is attached to the front surface of the upright column 5. The frame cover 20 is a frame body having a vertically long rectangular shape when viewed from the front, and covers the gap between the upright column 5 and the spindle head 6 to be described below from the outside. The Y-axis moving mechanism 13 is provided on a front surface 5B of the upright column 5 (see FIGS. 6 and 7), and movably supports the spindle head 6 in the Y-axis direction along the front surface 5B of the upright column 5 (see FIG. 6). Therefore, the upright column 5 movably supports the spindle head 6. The X-axis moving mechanism 11, the Z-axis moving mechanism 12, and the Y-axis moving mechanism 13 each include, for example, a guide, a ball screw, and a motor, and target parts (the carriage 15, the upright column 5, the spindle head 6) are moved along the guide by the power of the motor.

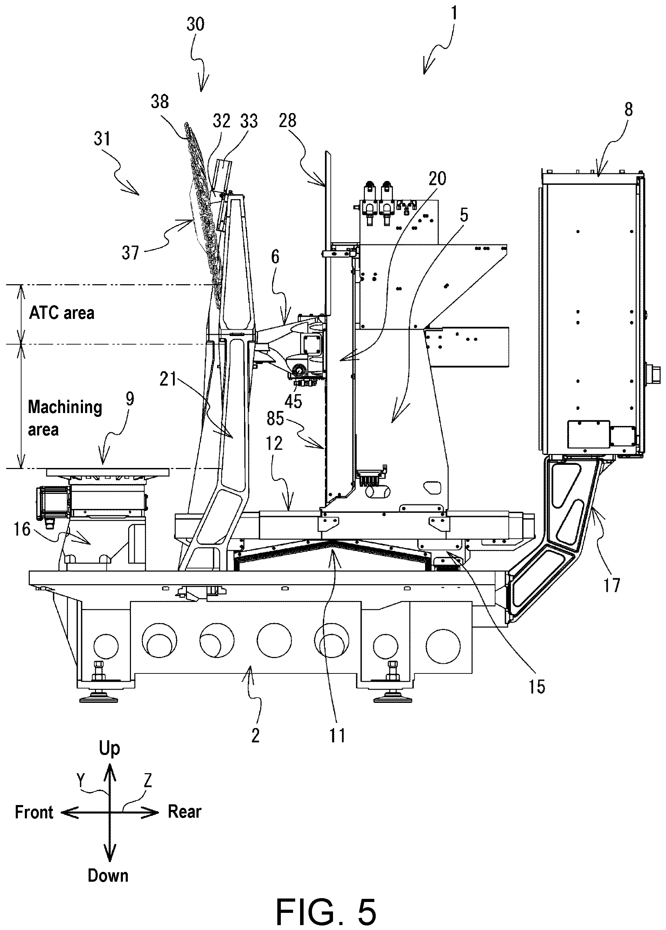

The spindle head 6 extends in the Z-axis direction, and has a substantially cylindrical front end and a substantially rectangular parallelepiped rear end. The machine tool 1 has a machining area and an ATC area (see FIG. 5). In the Y-axis direction, the spindle head 6 is movable between the machining area and the ATC area. The machining area is provided in a space on the base 2 side (lower side) than the Y-axis origin. The Y-axis origin is a position where the Y-axis machine coordinate is 0. The machining area is an area where a workpiece fixed on the upper surface of the rotary table 9 is machined. The ATC area is provided in the space on the opposite side (upper side) of the machining area with respect to the Y-axis origin. The ATC area is an area where the ATC device 30 performs tool replacement. The ATC area is provided on the upper side of the machining area and at a position overlapping with the machining area in the Z-axis direction.

The spindle head 6 includes an upper cover 28 and an armor cover 85. The upper cover 28 is a metal plate having a substantially rectangular shape when viewed from the front. A lower end part of the upper cover 28 is fixed to the rear end part of the upper surface of the spindle head 6. The upper cover 28 extends upward from the rear end part of the upper surface of the spindle head 6. The upper cover 28 moves up and down integrally with the spindle head 6, thereby constantly covering the area on the upper side than the spindle head 6 on the front surface of the upright column 5 from the front. The armor cover 85 is fixed in a suspended state to the rear end part of the lower surface of the spindle head 6. The armor cover 85 includes a plurality of metal plates arranged in the up-down direction, and telescopically expands and contracts in the up-down direction according to the height of the spindle head 6, thereby constantly covering the area on the lower side than the spindle head 6 on the front surface of the upright column 5 from the front.

As shown in FIG. 6, the spindle 7 is provided in the spindle head 6, and extends coaxially with the spindle head 6 in the Z-axis direction. The spindle head 6 rotatably supports the spindle 7. The spindle head 6 holds a spindle motor 26. An output shaft 26A of the spindle motor 26 extends forward and is coaxially connected to the rear end part of the spindle 7 via a coupling 25. An unclamping arm 50 is provided in the spindle head 6. The unclamping arm 50 fixes (grips) and releases the clamp of a tool holder 90 mounted on the spindle 7. The specific shape and operation of the unclamping arm 50 will be described later.

The spindle 7 has a tool mounting hole 40, a holder gripping part 41, and a draw bar 42. The tool mounting hole 40 is provided at the front end part of the spindle 7 (see FIGS. 1 and 6). The tool mounting hole 40 is a substantially conical tapered hole whose diameter increases toward the front end part of the spindle 7. The holder gripping part 41 is provided on the inner side (rear end side) of the tool mounting hole 40. The draw bar 42 is inserted coaxially into the shaft hole of the spindle 7 and is provided movable in the front-rear direction. The spindle 7 has a guide hole 44 formed on the outer peripheral surface at the rear end side. The guide hole 44 is an elongated hole extending parallel to the axial direction of the spindle 7 and penetrating in a direction perpendicular to the axial direction. The draw bar 42 has a pin 43 at its rear end part. The pin 43 extends in a direction perpendicular to the axial direction of the draw bar 42, and protrudes to the outside of the spindle 7 through the guide hole 44 in the spindle 7. The guide hole 44 guides the pin 43 in parallel with the axial direction.

The tool holder 90 is mounted detachable on the tool mounting hole 40. The tool holder 90 holds a tool 91 at one end, and has a tapered part 92 and a pull stud 93 at the other end. The tapered part 92 has a substantially conical shape corresponding to the tool mounting hole 40, and its diameter decreases in the direction away from the tool 91. The pull stud 93 protrudes from the top of the tapered part 92 in a direction away from the tapered part 92. The tapered part 92 is mounted in close contact on the tool mounting hole 40 of the spindle 7. When the tapered part 92 is mounted on the tool mounting hole 40, the holder gripping part 41 grips the pull stud 93. In this state, the holder gripping part 41 is pulled rearward by a spring (not shown), whereby the gripping of the pull stud 93 is locked. When the draw bar 42 presses the holder gripping part 41 forward within the shaft hole of the spindle 7, the holder gripping part 41 moves forward against the spring force, and the grip of the pull stud 93 is released.

As shown in FIG. 4, the base 2 includes a pair of support members 17 and 18 at the rear part. The support members 17, 18 are spaced apart from each other in the left-right direction, extend upward, and support the control box 8 from below. The control box 8 houses a control panel (not shown) therein. The control panel controls the operation of the machine tool 1. As shown in FIGS. 1, 4 and 5, the base 2 has a fix table 16 on the front side of the upper surface. The rotary table 9 is rotatably supported on the fix table 16. The rotary table 9 is located in front of the spindle head 6. The rotary table 9 has a workpiece (not shown) fixed to its upper surface by a jig (not shown), and is capable of rotating and positioning 360° about a rotation shaft parallel to the Y-axis direction.

As shown in FIG. 4, the base 2 has a pair of support columns 21, 22 on the left and right sides at the front side of the upper surface. The support column 21 extends upward from the right side of the upper surface of the base 2 and has its upper part bent to the left at approximately 90 degrees. The support column 22 extends upward from the left side of the upper surface of the base 2 and has its upper part bent to the right at approximately 90 degrees. A connecting plate 23 has a substantially rectangular shape when viewed from the front, and is fixed between the upper parts of the support columns 21 and 22 which face each other.

The ATC device 30 is fixed to the front surface of the connecting plate 23. The ATC device 30 is supported above the spindle head 6 by the support columns 21 and 22. As shown in FIGS. 4 and 5, the ATC device 30 includes a tool magazine 31, a speed reducer 32, a magazine motor 33, and the like. The tool magazine 31 includes a magazine base 37 and a plurality of grip arms 38. The magazine base 37 is substantially disk-shaped and is rotatably supported on the front surface of the connecting plate 23 about an axis line parallel to the Z-axis direction. The speed reducer 32 and the magazine motor 33 are attached to the magazine base 37. An output shaft (not shown) of the magazine motor 33 is connected to a rotation shaft (not shown) of the magazine base 37 via the speed reducer 32. Therefore, the power of the magazine motor 33 is transmitted to the rotation shaft of the magazine base 37 via the speed reducer 32. The plurality of grip arms 38 are arranged along the outer periphery part of the magazine base 37 and extend radially outward in the radial direction. The tip of the grip arm 38 grips the tool holder 90 in a direction perpendicular to the tool holder 90 with the tool holder 90 laid horizontally. The tool replacement position of the tool magazine 31 is the lowest position of the tool magazine 31. The grip arm 38 which replaces tools with the spindle 7 is indexed to the tool replacement position by the rotation of the tool magazine 31.

As shown in FIGS. 1 to 3, the magazine cover 10 is fixed to the front surface of the upper part of each of the support columns 21 and 22. The magazine cover 10 is box-shaped and covers the periphery of the tool magazine 31. The magazine cover 10 prevents chips and cutting fluid from splashing onto the tool magazine 31. An opening 102 is provided in the bottom wall 101 of the magazine cover 10. The opening 102 has a rectangular shape when viewed from the bottom, and is located directly below the tool replacement position of the tool magazine 31. The opening 102 is provided with a shutter 103. The shutter 103 opens and closes the opening 102 under the control of a control panel.

The shape of the unclamping arm 50 will be described with reference to FIG. 6 and FIG. 7. The unclamping arm 50 is formed in a substantially upside-down L-shape when viewed from the right side, and includes, in order from the bottom, a forked section 51, an arm section 52, a cam follower support section 53, and a cam follower 54.

The forked section 51 is forked into left and right sides facing downward when viewed from the front. The forked section 51 includes a central part 60, a right side part 61 and a left side part 62. The central part 60 forms an upper part of the forked section 51 and extends in the left-right direction. The right side part 61 hangs down from the right end part of the central part 60 and has a right fulcrum section 63 at its lower part. The right fulcrum section 63 bulges from the lower part of the right side part 61 at the front side and diagonally downward in a semicircular arc shape when viewed from the right side. The right fulcrum section 63 has a support hole 631. The support hole 631 has a circular shape when viewed from the right side, and penetrates the center of the right fulcrum section 63 in the left-right direction. The right side part 61 has a step part 611 on the upper side of the front surface. The step part 611 protrudes forward and is provided on its front surface with a pressing section 57 that is circular when viewed from the front.

The left side part 62 hangs down from the left end part of the central part 60 and has a left fulcrum section 64 at its lower part. The left fulcrum section 64 bulges from the lower part of the left side part 62 at the front side diagonally downward in a semicircular arc shape when viewed from the left side. The left fulcrum section 64 has a support hole 641. The support hole 641 has a circular shape when viewed from the left side, and penetrates the left fulcrum section 64 in the left-right direction. The left side part 62 has a step part 621 on the upper side of the front surface. The step part 621 protrudes forward and is provided on its front surface with a pressing section 58 that is circular when viewed from the front. The material of the pressing sections 57 and 58 is not limited, but may be an elastic material such as resin or rubber. A fulcrum shaft 45 (see FIG. 6) provided in the spindle head 6 is inserted in the support holes 631 and 641 in the left-right direction. A width of separation in the left-right direction between the left surface of the right side part 61 and the right surface of the left side part 62 is longer than an outer diameter of the spindle 7.

The arm section 52 extends rearward (toward the upright column 5) from an upper part of the central part 60 of the forked section 51. The arm section 52 is bent at an obtuse angle into a substantially V-shape at a substantially middle part in the front-rear direction when viewed from the right side. The arm section 52 includes an oblique direction part 65, a lateral direction part 66, a rectangular column section 55, and an engaging pin 56. The oblique direction part 65 extends from the upper part of the central part 60 of the forked section 51 at the rear side obliquely upward. The lateral direction part 66 extends rearward from the rear end part of the oblique direction part 65 in a substantially horizontal manner. The rectangular column section 55 is provided on the upper side of the connecting part between the oblique direction part 65 and the lateral direction part 66, and protrudes to the left and right from the left surface and the right surface of the connecting part. The engaging pin 56 protrudes leftward from the left end surface of the rectangular column section 55. One end part of a tension spring 72 is engaged with the engaging pin 56. The other end of the tension spring 72 is fixed inside the spindle head 6. The tension spring 72 constantly pulls the engaging pin 56 rearward. The tension spring 72 may be a coil spring.

The cam follower support section 53 protrudes from the lateral direction part 66 at rear end part obliquely upward rearward. The cam follower support section 53 rotatably supports the cam follower 54. The cam follower support section 53 is substantially U-shaped when viewed from the front, and includes a lower side part 67, a right support part 68, and a left support part 69. The lower side part 67 is inclined from the rear end part of the lateral direction part 66 of the arm section 52 at the rear side obliquely upward and extends in the left-right direction. The right support part 68 protrudes obliquely upward from the right end part of the lower side part 67. The right support part 68 has a support hole 681 at the upper part. The support hole 681 has a circular shape when viewed from the right side and penetrates an upper part of the right support part 68 in the left-right direction. The left support part 69 protrudes obliquely upward from the left end part of the lower side part 67. The left support part 69 has a support hole (not shown) in the upper part. The support hole has the same shape as the support hole 681 of the right support part 68. The right support part 68 and the left support part 69 face each other in the left-right direction.

The cam follower 54 includes a rotation shaft 541. The rotation shaft 541 passes through a shaft hole (not shown) in a center part of the cam follower 54 in the left-right direction. The right end part of the rotation shaft 541 is inserted and fixed in the support hole 681 of the right support part 68, and the left end part of the rotation shaft 541 is inserted and fixed in a support hole (not shown) of the left support part 69. The cam follower 54 is disposed between the right support part 68 and the left support part 69 and rotates about the rotation shaft 541.

The arrangement of the unclamping arm 50 in the spindle head 6 will be described with reference to FIG. 6 and FIG. 7. The spindle head 6 includes the fulcrum shaft 45 at the inner bottom part. The fulcrum shaft 45 is a round bar that extends in the X-axis direction below the spindle 7. The right side part 61 and the left side part 62 of the forked section 51 are disposed on the right and left sides of the spindle 7. The right fulcrum section 63 and the left fulcrum section 64 are disposed below the spindle 7. The fulcrum shaft 45 is inserted through the support hole 631 of the right fulcrum section 63 and the support hole 641 of the left fulcrum section 64 in the left-right direction. Therefore, the unclamping arm 50 is freely swingable about the fulcrum shaft 45. The pressing sections 57 and 58 are located above the right fulcrum section 63 and the left fulcrum section 64. The pressing sections 57 and 58 come into contact, from the rear, with two both parts of the pin 43 protruding from the guide hole 44 of the spindle 7.

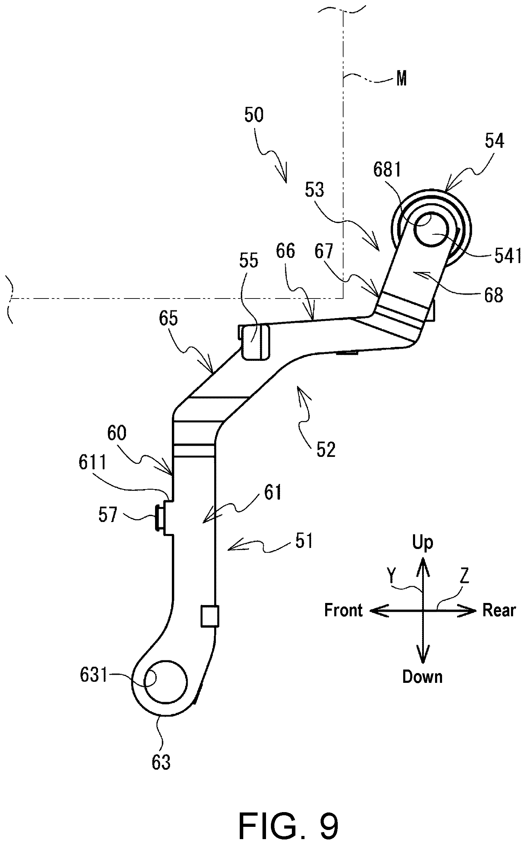

The oblique direction part 65 is inclined obliquely upward from the upper part of the forked section 51 and extends to immediately below an interference area M (see FIGS. 6 and 9). The interference area M is an upper side space on the opposite side of the right fulcrum section 63 and the left fulcrum section 64 with respect to the spindle 7, and is an area that may interfere with other members, such as the upper cover 28, the ATC device 30, and the upper parts of the support columns 21 and 22. The lateral direction part 66 extends directly below the interference area M toward the front surface side of the upright column 5. Therefore, the arm section 52 is capable of avoiding the interference area M (see FIG. 6).

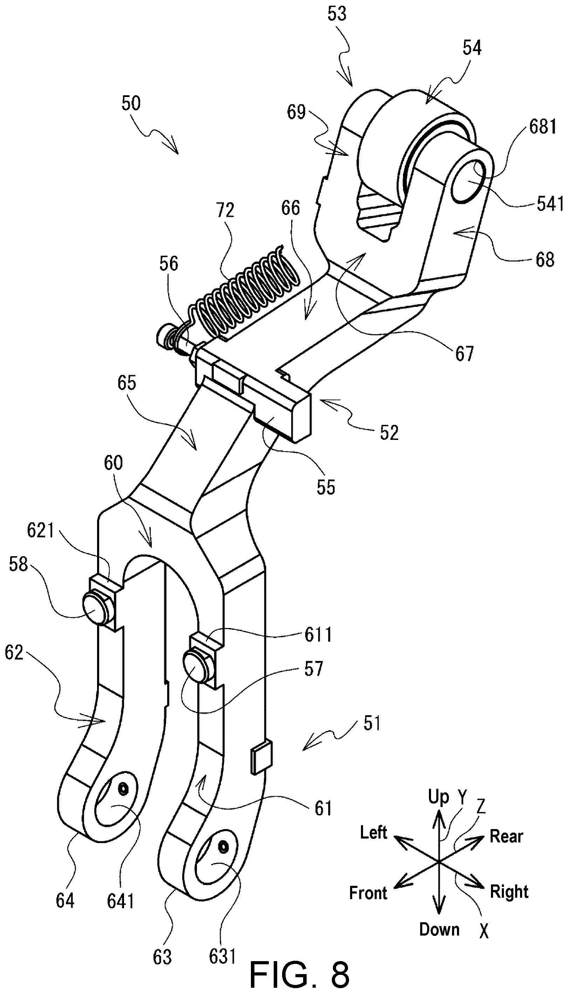

As shown in FIG. 6, a cam fix table 501 is provided on the upper part of the front surface of the upright column 5. The cam fix table 501 has a fixing surface on the front side that is parallel to the Y-axis direction. A cam member 80 is fixed to the fixing surface by screws. A cam surface 81 of the cam member 80 is disposed opposite to the front. The cam surface 81 is an inclined surface that is gradually inclined forward as it goes from the bottom to the top. When the spindle head 6 is located in the machining area, the cam follower 54 supported by the cam follower support section 53 is located behind the interference area M and below the cam surface 81. The tension spring 72 (see FIG. 8) constantly pulls the engaging pin 56 toward the front surface side of the upright column 5. Therefore, the unclamping arm 50 is constantly biased clockwise about the fulcrum shaft 45 when viewed from the right side.

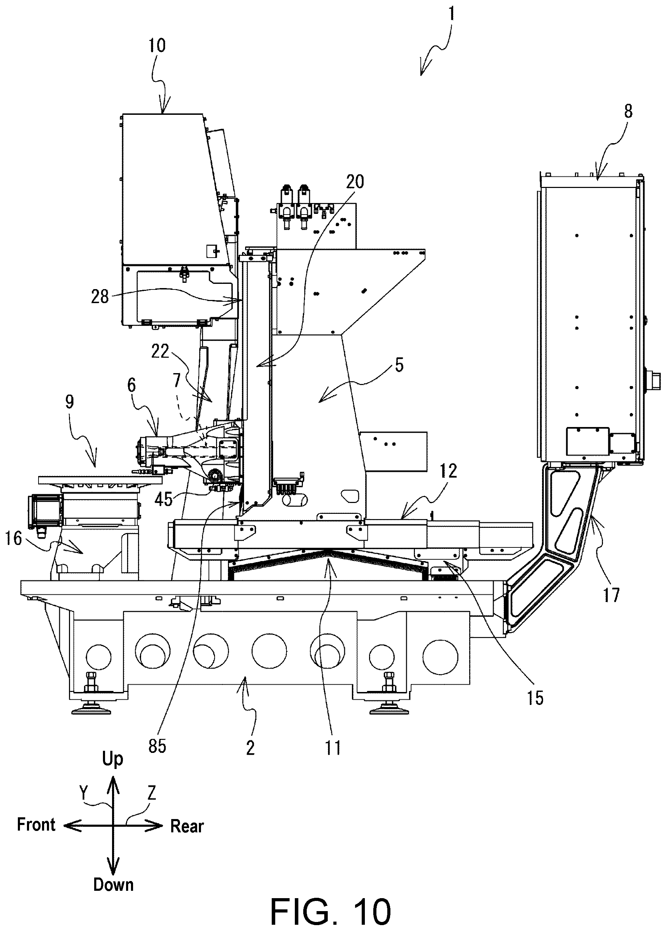

The ATC operation of the machine tool 1 will now be described. In FIGS. 10 to 13, the tool holder 90 and the support column 21 are omitted. In this embodiment, in order to describe the position of the spindle 7 during ATC operation, the movement of the spindle head 6 will be described as the movement of the spindle 7. As shown in FIG. 10, during machining of a workpiece, the spindle 7 is located within the machining area. The shutter 103 of the magazine cover 10 is in a closed state (see FIG. 2). The tapered part 92 of the tool holder 90 that holds a current tool is mounted on the tool mounting hole 40 of the spindle 7. The holder gripping part 41 grips the pull stud 93 of the tool holder 90 and is locked by spring force (see FIG. 6).

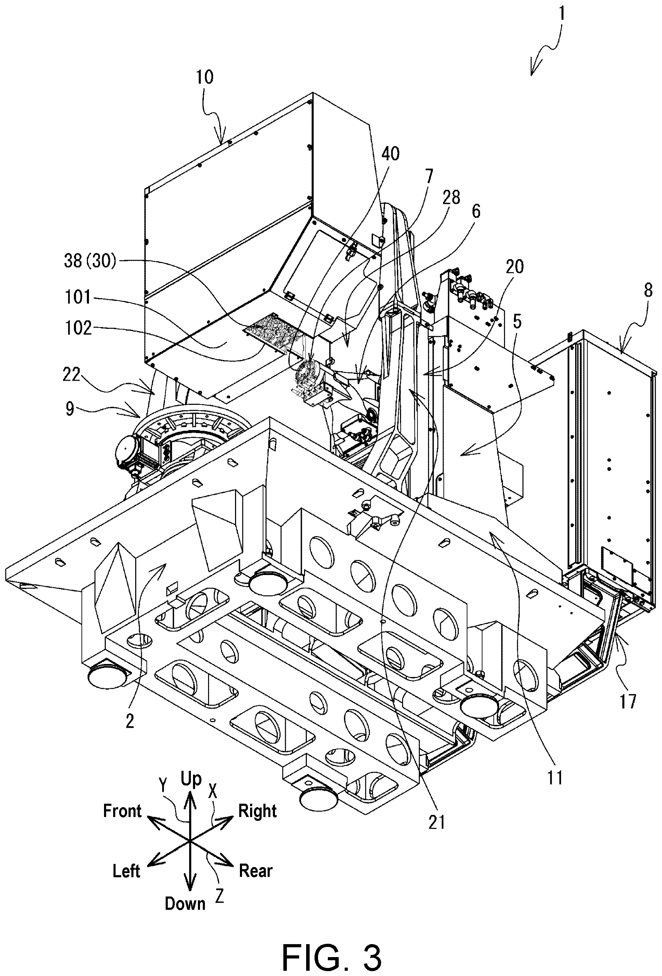

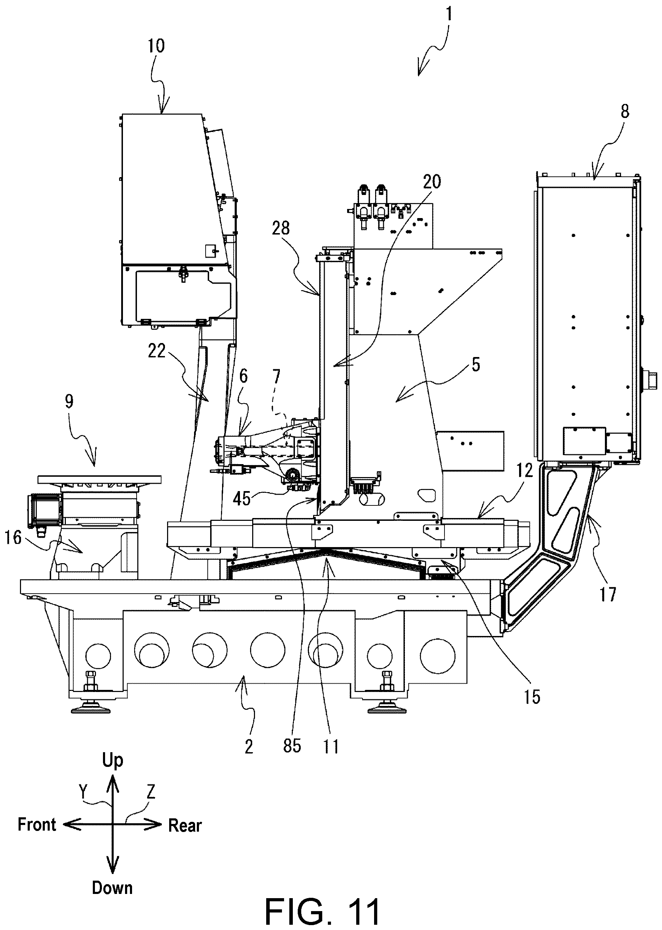

The CPU in the control panel reads a tool replacement command from the NC program. As shown in FIG. 11, the spindle 7 retreats along the Z axis to a position where the tool 91 does not come into contact with the workpiece and jig (not shown) on the rotary table 9. The shutter 103 of the magazine cover 10 opens (see FIG. 3). The grip arm 38 at the tool replacement position is exposed downward through the opening 102. The grip arm 38 at the tool replacement position is at an empty state in which it does not grip the tool holder 90.

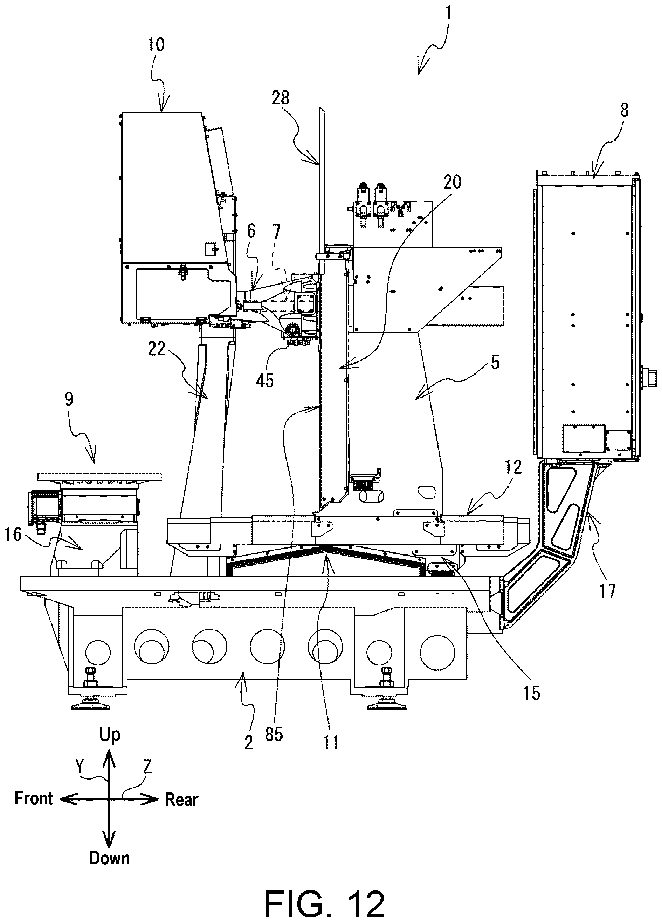

The spindle 7 starts to rise and moves toward the Y-axis ATC origin. The Y-axis ATC origin is a position having the same coordinates as the ATC origin in the Y-axis direction, and is in front of the ATC origin. The ATC origin is a reference point provided within the ATC area for tool replacement, and is a position at which the tool magazine 31 is rotatable. As shown in FIG. 12, when the spindle 7 rises, the tool holder 90 mounted on the spindle 7 is pushed from below into the grip arm 38 at the tool replacement position through the opening 102 of the magazine cover 10. When the spindle 7 reaches the Y-axis ATC origin, the grip arm 38 grips the tool holder 90.

On the other hand, as the spindle 7 rises, the cam follower 54 comes into contact with the lower part of the cam surface 81 and slides toward the upper side on the cam surface 81 (see FIG. 7). The tension spring 72 constantly biases the unclamping arm 50 clockwise when viewed from the right side. Therefore, the cam follower 54 is in close contact with the cam surface 81. The cam follower 54 moves forward as it slides upward on the cam surface 81. Therefore, the unclamping arm 50 swings counterclockwise in right side view about the fulcrum shaft 45 against the spring force of the tension spring 72. The pressing sections 57 and 58 contact two ends of the pin 43 of the draw bar 42 from the rear, and press the draw bar 42 forward. In this embodiment, when the grip arm 38 is viewed from the right side, fulcrum centers of the right fulcrum section 63 and the left fulcrum section 64 and the right surface of the pin 43 (the front surfaces of the pressing sections 57 and 58) are arranged on a straight line extending in the up-down direction, such that the pressing sections 57 and 58 are capable pressing two ends of the pin 43 parallel to the spindle 7. The draw bar 42 biases the holder gripping part 41 forward. The holder gripping part 41 releases the lock of the pull stud 93. The tool holder 90 become removable from the tool mounting hole 40 of the spindle 7.

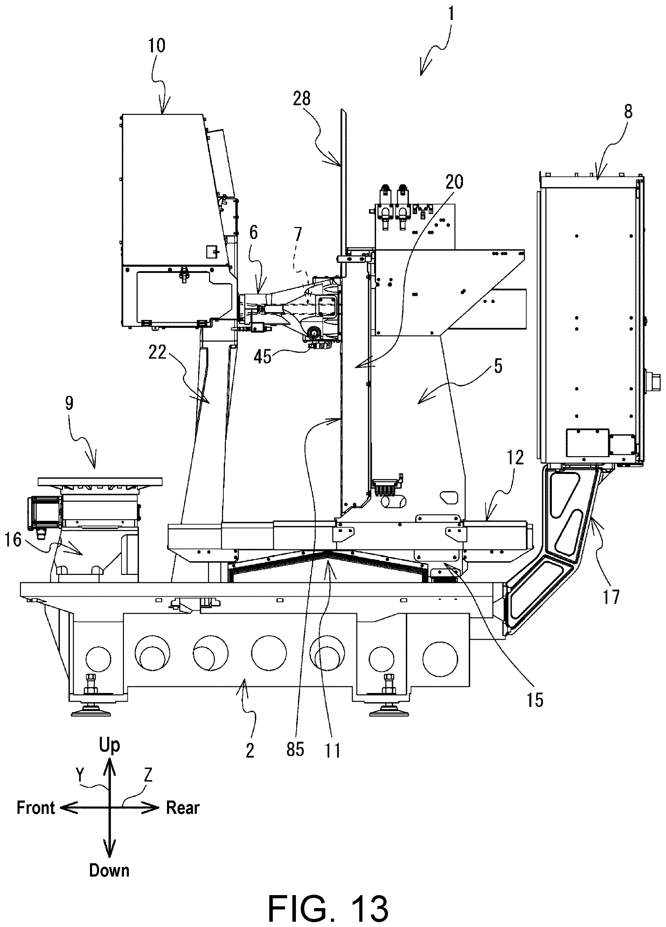

With the grip arm 38 clamping the tool holder 90 to be mounted on the spindle 7, the spindle 7 retreats from the Y-axis ATC origin to the ATC position (see FIG. 13). The tool holder 90 is removed from the tool mounting hole 40. Thereafter, the tool magazine 31 rotates to index and position the grip arm 38 that grips the tool holder holding the next tool at the tool replacement position. The next tool is a tool to be next mounted on the spindle 7 as specified by the tool replacement command. The tapered part 92 of the tool holder 90 of the next tool is located in front of the tool mounting hole 40 of the spindle 7.

The spindle 7 advances from the ATC position toward the Y-axis ATC origin (see FIG. 12). The tapered part 92 of the tool holder 90 is inserted into the tool mounting hole 40, and the holder gripping part 41 grips the pull stud 93. The cam follower 54 slides on the cam surface 81 from above to below. Since the cam follower 54 moves rearward, the unclamping arm 50 swings clockwise about the fulcrum shaft 45 when viewed from the right side. The pressing sections 57 and 58 move rearwardly away from two ends of the pin 43, and the forward pressing of the draw bar 42 is released. The draw bar 42 releases the forward bias of the holder gripping part 41, such that the holder gripping part 41 locks its grip on the pull stud 93. Now that the ATC operation is complete, the spindle 7 descends to the machining area and proceeds to machining the next workpiece.

In the above description, the holder gripping part 41 and the draw bar 42 are an example of the tool gripping mechanism of the present invention. The right fulcrum section 63 and the left fulcrum section 64 are examples of the fulcrum section of the present invention. The cam follower 54 is an example of a force point section and an example of a roller of the present invention. The pressing sections 57 and 58 are an example of the action point section of the present invention. The cam member 80 fixed to the upper part of the front surface of the upright column 5 is an example of a contact section of the present invention. The front surface 5B of the upright column 5 is an example of a moving surface of the present invention.

As described above, the machine tool 1 of this embodiment includes the spindle 7, the holder gripping part 41, the draw bar 42, the spindle head 6, the upright column 5, and the unclamping arm 50. The upright column 5 movably supports the spindle head 6. The spindle head 6 rotatably holds the spindle 7. The spindle 7 mounts the tool holder 90. The holder gripping part 41 and the draw bar 42 are provided inside the spindle 7 and fix or release the tool holder 90 to or from the spindle 7. The unclamping arm 50 is rotatably supported within the spindle head 6, and presses or not presses the pin 43 of the draw bar 42 in conjunction with the movement of the spindle head 6, thereby fixing or releasing the tool holder 90 by the holder gripping part 41. The unclamping arm 50 includes the right fulcrum section 63, the left fulcrum section 64, the cam follower 54, and the pressing sections 57 and 58. The right fulcrum section 63 and the left fulcrum section 64 are rotatably supported by the fulcrum shaft 45 provided in the spindle head 6. The cam follower 54, in conjunction with the movement of the spindle head 6, comes into contact with the cam surface 81 provided to the upright column 5, and receives an external pressure. The pressing sections 57 and 58 press or not press the pin 43 of the draw bar 42 as the cam follower 54 receives an external pressure and rotates about the right fulcrum section 63 and the left fulcrum section 64. In such an unclamping arm 50, the right fulcrum section 63 and the left fulcrum section 64, the pressing sections 57 and 58, and the cam follower 54 are arranged in that order, the right fulcrum section 63 and the left fulcrum section 64 and the pressing sections 57 and 58 are arranged on a straight line intersecting the axial direction of the spindle 7, and the cam follower 54 is arranged at a position away from the right fulcrum section 63 and the left fulcrum section 64 towards the upright column 5.

Therefore, when the unclamping arm 50 rotates in conjunction with the movement of the spindle head 6, the cam follower 54 is capable of avoiding the interference area M, thereby reducing the possibility of interference with other members. The unclamping arm 50 is arranged in the order of the right fulcrum section 63 and the left fulcrum section 64, the pressing sections 57 and 58, and the cam follower 54 from bottom to top, such that the arm part from the right fulcrum section 63 and the left fulcrum section 64 to the cam follower 54 and the arm part from the right fulcrum section 63 and the left fulcrum section 64 to the pressing sections 57 and 58 may be integrated into a single shape. Therefore, compared to a configuration in which the two arm parts have different shapes, the unclamping arm 50 can be designed compactly.

Since the machine tool 1 is lateral type, the axial direction of the spindle 7 is horizontal. The interference area M is an area including other members such as the ATC device 30 and the upper cover 28 located below the spindle 7. The right fulcrum section 63 and the left fulcrum section 64 of the unclamping arm 50 are disposed below the spindle 7. Therefore, the unclamping arm 50 is capable of arranging the pressing sections 57 and 58 above the right fulcrum section 63 and the left fulcrum section 64, and is capable of arranging the cam follower 54 at a position away from the right fulcrum section 63 and the left fulcrum section 64 towards the upright column 5. Therefore, the cam follower 54 is capable of avoiding the interference area M.

As the spindle head 6 moves up and down, the cam follower 54 slides on the cam surface 81. By sliding on the cam surface 81, the cam follower 54 receives an external pressure, so the unclamping arm 50 can swing smoothly and stably about the right fulcrum section 63 and the left fulcrum section 64.

The right fulcrum section 63 and the left fulcrum section 64 are disposed at positions spaced forward from the front surface of the upright column 5. The cam follower 54, in conjunction with the up and down movement of the spindle head 6, slides on the cam surface 81 provided on the front surface of the upright column 5 and receives an external pressure. Therefore, by the cam follower 54 coming into contact with the cam surface 81 and receiving an external pressure, the unclamping arm 50 is capable of swinging about the right fulcrum section 63 and the left fulcrum section 64.

The unclamping arm 50 includes the arm section 52 between the pressing sections 57 and 58 and the cam follower 54. The arm section 52 includes the oblique direction part 65 and the lateral direction part 66. The oblique direction part 65 extends diagonally upward from the pressing sections 57 and 58 side toward the front surface side of the upright column 5, and the lateral direction part 66 extends from an upper end part of the oblique direction part 65 toward the rear, that is, toward the upright column 5. Therefore, the unclamping arm 50 may easily dispose the cam follower 54 at a position away from the right fulcrum section 63 and the left fulcrum section 64 toward the upright column 5.

The present invention is not limited to the above-described embodiment, and various modifications are possible. Although the machine tool 1 in the above embodiment is of a lateral type, it may be of a vertical type in which the axial direction of the spindle is up-down direction. Although the machine tool 1 includes the Z-axis moving mechanism 12 above the X-axis moving mechanism 11, the upper and lower positions of the X-axis moving mechanism 11 and the Z-axis moving mechanism 12 may be reversed. The machine tool 1 may have the upright column 5 that moves in the X-axis direction and the Z-axis direction, but the position of the upright column 5 may also be fixed with respect to the base 2, and the table that supports the workpiece is moved in the X-axis direction and the Z-axis direction.

In the above embodiment, the cam follower 54 is provided at the force point section of the unclamping arm 50, and the cam member 80 is provided at the upper part of the front surface of the upright column 5, and as the spindle head 6 moves up and down, the cam follower 54 slides on the cam surface 81 of the cam member 80, but, for example, the cam follower and the cam member may be interchanged.

The unclamping arm 50 has the forked section 51 on the lower side, but it does not have to be fork-shaped. The forked section 51 has two fulcrum sections, the right fulcrum section 63 and the left fulcrum section 64, at the lower part of each of the right side part 61 and the left side part 62, and has two pressing sections 57 and 58 on the entire surface of each, but the number of fulcrum sections and the pressing sections may be one or more.

The arm section 52 of the unclamping arm 50 consists of two parts, the oblique direction part 65 and the lateral direction part 66, but the shape is not limited as long as it extends rearward (the upright column 5 side) from the upper part of the central part 60 of the forked section 51. For example, the arm section 52 is bent at an obtuse angle in a substantially V-shape at the approximate middle part, but may be smoothly curved. It may also be bent rearward from the upper part of the central part 60 of the forked section 51 and extend directly toward the upright column 5.

### [Reference Signs List]

- 1: Machine tool
- 5: Upright column
- 5B: Front surface
- 6: Spindle head
- 7: Spindle
- 41: Holder gripping part
- 42: Draw bar
- 43: Pin
- 50: Unclamping arm
- 52: Arm section
- 54: Cam follower
- 57, 58: Pressing section
- 63: Right fulcrum section
- 64: Left fulcrum section
- 65: Direction part
- 66: Lateral direction part
- 80: Cam member
- 90: Tool holder
- 91: Tool

## Claims

1. An unclamping arm, rotatably supported within a spindle head of a machine tool which comprises: a spindle on which a tool is mounted, a tool gripping mechanism provided inside the spindle and configured to fix or release the tool to and from the spindle, the spindle head that rotatably holds the spindle, and an upright column that movably supports the spindle head, and configured to operate fixing or releasing of the tool by the tool gripping mechanism, the unclamping arm comprising:
a fulcrum section rotatably supported within the spindle head;
a force point section, in conjunction with a movement of the spindle head, configured to come into contact with a contact section provided on the upright column and receive an external pressure; and
an action point section configured to, by the force point section rotating about the fulcrum section upon receiving the external pressure, press or not press the tool gripping mechanism to operate fixing or releasing of the tool by the gripping mechanism,
wherein the action point section is located between the fulcrum section and the force point section,
the fulcrum section and the action point section are located on a straight line intersecting an axial direction of the spindle, and
the force point section is located at a position away from the fulcrum section toward a side of the upright column.

2. The unclamping arm according to claim 1,
wherein the axial direction is horizontal.

3. The unclamping arm according to claim 1 or 2,
wherein a cam is provided on the contact section, and
a roller that slides on the cam is provided at the force point section.

4. The unclamping arm according to claim 1 or 2,
wherein the fulcrum section is disposed at a position away from a moving surface of the upright column on a side where the spindle head moves toward a side of the spindle, and
the force point section is configured to, in conjunction with the movement of the spindle head, come into contact with the contact section provided on the moving surface of the upright column and receive the external pressure.

5. The unclamping arm according to claim 1 or 2,
wherein an extension part, which extends from a side of the action point section to the side of the upright column in a direction intersecting the straight line, is provided between the action point section and the force point section.

6. A machine tool, comprising:
a spindle on which a tool is mounted, a tool gripping mechanism provided inside the spindle and configured to fix or release the tool to or from the spindle, a spindle head that rotatably holds the spindle, an upright column that movably supports the spindle head, and an unclamping arm rotatably supported within the spindle head and configured to operate fixing or releasing of the tool by the tool gripping mechanism,
wherein the unclamping arm comprises:
a fulcrum section rotatably supported within the spindle head;
a force point section, in conjunction with a movement of the spindle head, configured to come into contact with a contact section provided on the upright column and receive an external pressure; and
an action point section configured to, by the force point section rotating about the fulcrum section upon receiving the external pressure, press or not press the tool gripping mechanism to operate fixing or releasing of the tool by the gripping mechanism,
wherein the action point section is located between the fulcrum section and the force point section,
the fulcrum section and the action point section are located on a straight line intersecting an axial direction of the spindle, and
the force point section is located at a position away from the fulcrum section toward the side of the upright column.
